# EUROPEAN PATENT SPECIFICATION

(11) **EP 4 504 577 B1**
(45) Date of publication and mention of the grant of the patent: **15.10.2025**
(21) Application number: 24719292.5
(22) Date of filing: 03.04.2024
(51) Int. Cl.: B62D 35/00, B62D 37/02

(54) **VEHICLE AND METHOD**
FAHRZEUG UND VERFAHREN
VÉHICULE ET PROCÉDÉ

(30) Priority: 04.04.2023 IT 202300006576
(43) Date of publication of application: 12.02.2025
(73) Proprietor: Automobili Lamborghini S.P.A., 40019 Sant'Agata Bolognese (BO) (IT)
(72) Inventor: SEPE, Vincenzo, 40019 Sant'Agata Bolognese (Bologna) (IT); RICCIO, Ugo, 41125 Modena (IT); GHEDINI, Filippo, 41034 Finale Emilia (Modena) (IT); MOHR, Rouven, 40011 Anzola dell'Emilia (BO) (IT); UNDERBERG, Victor, 85057 Ingolstadt (DE)
(74) Representative: Puggioli, Tommaso
(86) International application number: PCT/IB2024/053235
(87) International publication number: WO 2024/209362

(56) References cited:
- EP-A1- 3 037 285
- DE-A1- 102021 125 377
- GB-A- 2 469 104
- US-A1- 2007 216 194
- US-A1- 2019 176 909
- US-B1- 9 403 564

## Description

### Technical field

This invention relates to a vehicle comprising a regulating system for regulating an aerodynamic resistance of the vehicle, and to a method for regulating an aerodynamic resistance of the vehicle.

### Background art

Known in the prior art are systems for modifying vehicle aerodynamic resistance as required, used especially in sports cars, such as the Drag Reduction System (DRS), for example.

The prior art systems concerned comprise a rear wing having a fixed profile and a flap which is movable between a closed position, where it enables the vehicle to hold the road better, and an open position, where it reduces the aerodynamic resistance and the downforce, allowing the vehicle to significantly increase its speed.

For example, document DE102021125377, discloses a vehicle aerodynamic load adjustment device located downstream of the rear window and comprising a spoiler flap mounted upstream of a rear wing directly adjacent to the wing itself; the spoiler flap is movable between an extended position, where, together with the rear wing, it forms a large spoiler composed of the spoiler flap and the rear wing, and a retracted position, where the spoiler flap is essentially part of the aerodynamic outer skin of the vehicle body and the rear wing acts aerodynamically as a wing.

In another example, document EP3037285 describes a vehicle having an aerodynamics adaption unit which comprises a spoiler, positioned at a rear end of the vehicle, and an adaptable flap which defines a wing applied to the roof of the vehicle; the spoiler and the wing are rotatable about respective axes by means of actuators and are movable relative to each other. Since it does not have an idle position, the roof-mounted wing, at all of its positions, at least partly affects the air flow that can strike the rear spoiler.

The prior art devices generally comprise actuators and mechanisms driven by the actuators for moving the flap between the closed position and the open position.

In particular, the larger the size of the rear wings, the higher the load acting on the actuators.

The actuators are thus subjected to particularly high stresses and, in some cases, are complex and cumbersome.

Indeed, the actuators are built into pillars, which means that such pillars must be implemented in the vehicle in that, for example, they contain actuator motors.

In this industry, therefore, there is a need to overcome the drawbacks of the prior art.

### Aim of the invention

The aim of this invention is to meet the above-mentioned need by providing a vehicle comprising a system for regulating aerodynamic resistance and a related regulating method which are better performing and simpler than the prior art systems.

At least said aim is achieved by the invention as characterized in the independent claims.

The dependent claims correspond to possible different embodiments of the invention.

According to an aspect of it, this disclosure relates to a vehicle comprising a system for regulating an aerodynamic resistance.

For example, the regulating system is applied to a sports car preferably equipped with a rear engine.

The regulating system comprises:
- a first aerodynamic element disposed in a rear portion of the vehicle
- a second aerodynamic element, coupled to a first surface of the vehicle and disposed upstream of the first aerodynamic element in a vehicle advancing direction.

The second aerodynamic element is mounted to be spaced from the first element.

In other words, the second aerodynamic element is mounted upstream of the first aerodynamic element, in a vehicle advancing direction, at a predetermined distance therefrom.

The second aerodynamic element has an aerodynamic surface which is movable between a non-operating configuration, where the aerodynamic surface allows the air flow to be directed towards the first aerodynamic element and leaves the air flow undisturbed, and an operating configuration, where it at least partly deflects an air flow flowing over the first surface and directed towards the first aerodynamic element.

The regulating system comprises an actuator configured to move the aerodynamic surface from the operating configuration to the non-operating configuration and vice versa.

The first aerodynamic element may be a wing, an upper or rear panel or a rear spoiler.

The first element is preferably an aerodynamic element designed to modify the downforce of the vehicle.

Advantageously, the regulating system allows having better control of the downforce and aerodynamic resistance of the vehicle.

In the operating configuration, the second element allows modifying the quantity of motion and the direction of the air flow.

This reduces the load on the first aerodynamic element by not acting on the surfaces thereof but modifying the quantity of motion and the direction of flow upstream.

In the non-operating configuration, the aerodynamic surface allows the air flow to be directed towards the first aerodynamic element.

In particular, in the non-operating configuration it is as if the second aerodynamic element were not present.

Advantageously, allowing the flow to be directed towards the car rear - for example, towards the rear bonnet - makes it possible to manage car cooling in terms of both engine cooling and underbody thermal cooling.

In the non-operating configuration, there is maximum compression on the surfaces of the first aerodynamic element and most of the air ducts located between the first and the second aerodynamic element at the upper position of the car (for example, rear bonnet, cofango) act as inlet ducts, pushing cool air into the engine bay to lower the temperature of hot parts.

In the operating configuration, the compression applied to the surfaces of the first aerodynamic element is considerably reduced and the air ducts, where necessary, might act as air outlets during the engine cycle, contributing to the extraction of hot air from the engine bay and to the mass flow of the radiators.

According to an aspect, the vehicle comprises a roof comprising the first surface and the second aerodynamic element is coupled to a portion of the roof.

In an example, the second aerodynamic element is an extension of the roof itself.

According to an aspect, the vehicle comprises a rear bonnet comprising the first surface and the second aerodynamic element is coupled to a portion of the rear bonnet.

In other words, the second aerodynamic element may be coupled to a point on the first surface of the vehicle anywhere from the windscreen to the rear end of the vehicle.

According to an aspect, the second aerodynamic element is movable between a first position, where it is away from the first surface in the operating configuration, and a second position, where the second element is close to the first surface in the non-operating configuration.

According to an aspect, the aerodynamic surface makes a first angle with the first surface, in the operating configuration, and a second angle with the first surface, in the non-operating configuration.

In other words, moving the aerodynamic surface, which defines an active surface, modifies the angle of attack of the oncoming flow at the first aerodynamic element.

At the second angle, the second element is positioned in such a way as to be neutral relative to the oncoming air flow from the front of the car and the air reaches the first aerodynamic element as if the second aerodynamic element were not present.

Increasing the angle of attack increases the level of downforce generated by the first element.

At the first angle, the positioning of the aerodynamic surface of the second element produces a reduction in the angle of attack of the oncoming flow at the first aerodynamic element, thus reducing the downforce that it can generate.

The reduction in the downforce produces a decrease in both the resistance induced by the first aerodynamic element and the additional base resistance which the first aerodynamic element would have produced on the car rear.

According to an aspect, the second aerodynamic element may adopt multiple intermediate positions between the operating position and the non-operating position.

Advantageously, the intermediate positions of the second aerodynamic element allow conditioning the flow which strikes the first aerodynamic element.

In other words, the angle between the aerodynamic surface of the second element and the first surface may vary between a maximum value, determined by the second angle, and a minimum value, determined by the first angle, thus modifying the aerodynamic load of the vehicle.

Increasing the angle of attack causes an increase in the aerodynamic load.

According to an aspect, the actuator is of the electromechanical, mechanical or electropneumatic type.

According to an aspect, the actuator comprises at least one element made from a shape memory alloy.

According to an aspect, the element made from shape-memory alloy is configured to deform the aerodynamic surface between a first shape, in the operating configuration, and a second shape, in the non-operating configuration.

Advantageously, deforming the aerodynamic surface of the second makes it possible to vary the level of downforce and aerodynamic resistance offered by the surface itself.

Advantageously, acting on the aerodynamic surface of the second element modifies the properties of the flow.

According to an aspect, the regulating system comprises at least one temperature sensor, configured to generate a temperature signal, and a control and drive unit in communication at least with the temperature sensor and with the actuator.

The control unit is configured to receive the temperature signal and, via the actuator, to move the aerodynamic surface as a function of the temperature signal.

For example, the temperature sensor can detect an outside temperature and/or a temperature of the radiators of the vehicle.

Advantageously, moving the aerodynamic surface of the second aerodynamic element to deflect the flow allows controlling the outgoing flow of the underbody or the incoming flow of cool air, based on temperature requirements.

According to an aspect, the first aerodynamic element comprises a rear spoiler comprising a fixed portion having a main direction of extension, and at least a first and a second movable portion,
the first portion being juxtaposed with the second movable portion along the main direction of extension,
the first movable portion and the second movable portion being respectively movable, independently of each other, between a closed position, where they are in contact with the fixed portion, and an open position, where they are away from the fixed portion to define a first and a second opening.

Advantageously, opening or closing the first or the second opening allows varying the aerodynamic load of the vehicle when negotiating a curve.

When the vehicle is in a curve, the movable portion which is on the inner side relative to the curve remains at the closed position, while the movable portion which is on the outer side may be opened so as to better control the aerodynamic load and the aerodynamic yaw and pitching moments.

According to an aspect, the control and drive unit is in communication with the first aerodynamic element and is configured to move the first and/or the second movable portion independently of each other as a function of the temperature signal.

According to an aspect, the control and drive unit is in communication with the first aerodynamic element and is configured to move the first and/or the second movable portion as a function of whether the aerodynamic surface is in the operating or the non-operating configuration.

Deflecting most of the air flow coming from the front of the vehicle and passing the first aerodynamic element allows considerably reducing the variation in the quantity of motion that it can produce.

The result is a substantial decrease in the downforce, maximizing the reduction in the aerodynamic resistance.

The regulating system made this way allows limiting the force necessary to control the actuator, irrespective of the aerodynamic load which the first element could generate.

Even in the case of particularly large elements, such as spoilers or flaps of considerable size, it is possible to reduce the downforce without weighing excessively on the actuator.

According to an aspect of it, this disclosure relates to a method for regulating an aerodynamic resistance of a vehicle according to any of the aspects set out above.

The method comprises the steps of:
- moving the aerodynamic surface from the non-operating configuration to the operating configuration,
- at least partly deflecting an air flow flowing over the first aerodynamic surface and directed towards the first aerodynamic element in the operating configuration.

According to an aspect, the method comprises a step of moving the second aerodynamic element between a first position, where it is away from the first surface in the operating configuration, and a second position, where it is close to the first surface in the non-operating configuration.

According to an aspect, the method comprises a step of moving the aerodynamic surface to make, with the first surface, a first angle in the operating configuration, and to make a second angle in the non-operating configuration.

According to an aspect, the method comprises a step of deforming the aerodynamic surface between a first shape, in the operating configuration, and a second shape, in the non-operating configuration.

According to an aspect, the method comprises a step of measuring a temperature and generating a temperature signal.

The step of moving the aerodynamic surface between the non-operating configuration and the operating configuration comprises a step of moving the aerodynamic surface as a function of the temperature signal.

According to an aspect, the method comprises a step of moving the first portion and/or the second portion independently of each other, between a closed position, where they are in contact with the fixed portion, and an open position, where they are away from the fixed portion to define a first and a second opening.

According to an aspect, the step of moving the first portion and/or the second portion independently of each other comprises a step of moving the first and/or the second movable portion independently of each other as a function of the temperature signal.

According to an aspect, the method comprises a step of moving the first and/or the second movable portion as a function of whether the aerodynamic surface is in the first or the second configuration.

### Brief description of the drawings

The main features of the invention are more apparent from the detailed description which follows, with reference to the accompanying drawings which illustrate a preferred embodiment of the invention purely by way of non-limiting example, and in which:
- Figure 1 shows a vehicle according to the disclosure in a schematic perspective view;

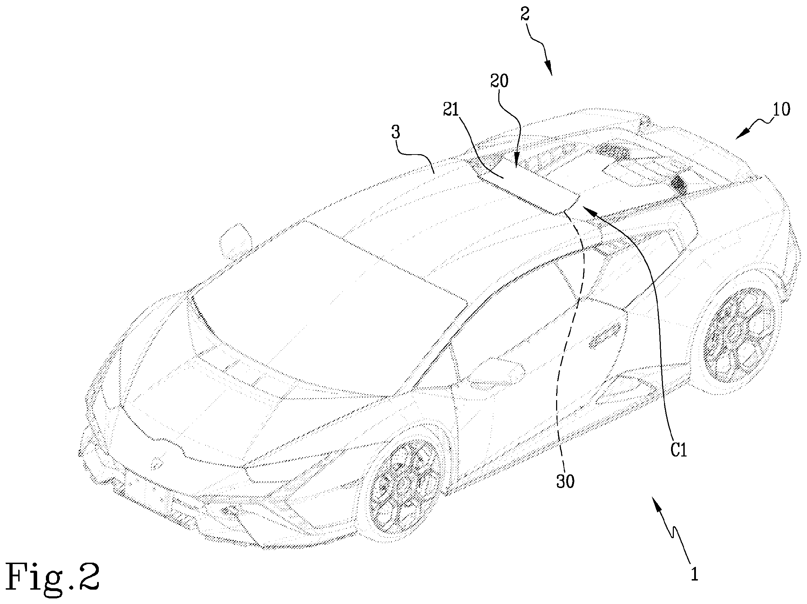

- Figure 2 shows a vehicle according to the disclosure in a schematic perspective view;
- Figures 3 and 4 show schematic perspective views of an aerodynamic element of the vehicle of Figure 2 in a first and a second configuration;
- Figures 5 and 6 show schematic perspective views of an aerodynamic element of the vehicle of Figure 1 in a first and a second configuration;
- Figure 7 shows a schematic perspective view of an aerodynamic element of the vehicle of Figure 1 at a first position;
- Figures 8A-8D show schematic perspective views of an aerodynamic element of the vehicle of Figure 1, comprising movable portions at multiple positions.

### Detailed description of preferred embodiments of the invention

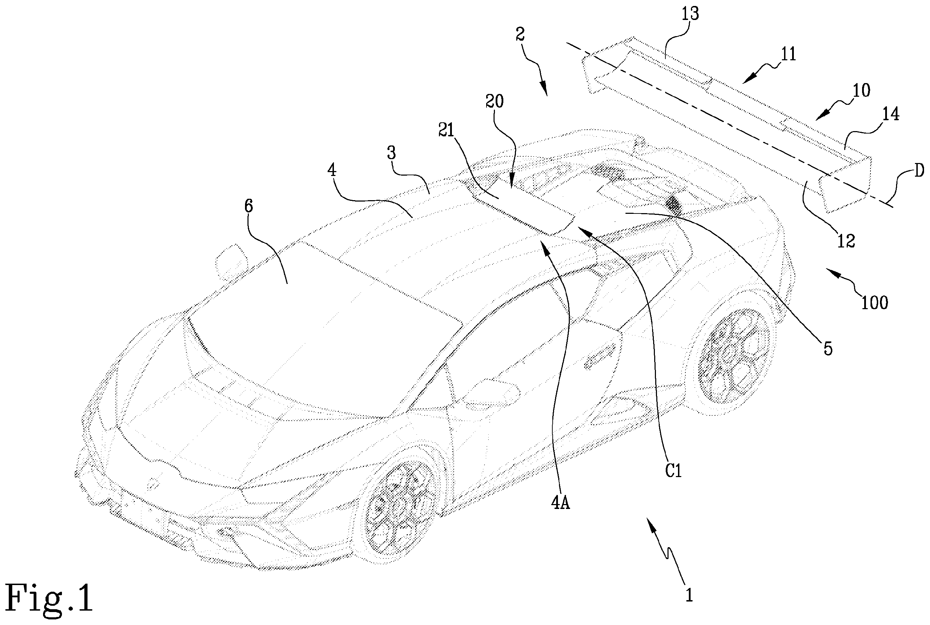

With reference to the accompanying drawings, and in particular Figure 1, the numeral 1 denotes a vehicle according to the disclosure.

The vehicle 1 comprises a regulating system 100 for regulating an aerodynamic resistance of the vehicle 1.

The regulating system 100 comprises an aerodynamic element 10 disposed in a rear portion 2 of the vehicle 1.

In an embodiment, the element 10 is a wing or a spoiler flap.

In an embodiment, the element 10 is a spoiler.

In an embodiment not illustrated, the element 10 is a rear lip of the vehicle 1.

The vehicle 1 comprises an aerodynamic element 20 coupled to a first surface 3 of the vehicle 1 and located upstream of the aerodynamic element 10 in an advancing direction of the vehicle 1.

The surface 3 is defined by a top surface of the vehicle 1, extending from a windscreen 6 at the front of the vehicle to a rear portion 2 of the vehicle.

The aerodynamic element 20 is located upstream of the aerodynamic element 10 at a predetermined distance from the aerodynamic element 10 itself.

In an embodiment, the aerodynamic element 10 is located at the surface 3 downstream of the aerodynamic element 20 in an advancing direction of the vehicle 1.

The aerodynamic elements 10 and 20 are therefore spaced along the surface 3.

The aerodynamic element 20 has an aerodynamic surface 21 movable between an operating configuration C1, where it at least partly deflects an air flow F that strikes the first surface 3 in the direction towards the aerodynamic element 10, and a non-operating configuration C2.

The two aerodynamic elements 10 and 20 are therefore spaced in such a way that the aerodynamic element 20, in the non-operating configuration C1, can at least partly deflect an air flow F directed towards the aerodynamic element 10.

Preferably, in the non-operating configuration C1, the aerodynamic element 20 completely deflects the air flow F relative to the aerodynamic element 10, which is therefore not struck by the air flow F.

The vehicle comprises a roof 4.

The vehicle comprises a rear bonnet 5.

In an embodiment, the roof 4 comprises the surface 3 and the aerodynamic element 20 is coupled to a portion of the roof 4.

In an embodiment, the aerodynamic element 20 is substantially an extension of the roof 4.

In an embodiment, the rear bonnet 5 comprises the surface 3 and the aerodynamic element 20 is coupled to a portion of the rear bonnet 5.

The system 100 comprises an actuator 30 configured for moving the aerodynamic surface 21 from the operating configuration C1 to the non-operating configuration C2 and vice versa.

In an embodiment, the actuator 30 is electromechanical or mechanical.

In an embodiment, the actuator 30 comprises at least one element 31 that is made from a shape-memory alloy.

In an embodiment, in the non-operating configuration C2, the aerodynamic surface 21 allows the air flow F to be directed towards the aerodynamic element 10.

In the non-operating configuration C2, the air flow F is undisturbed.

In the non-operating configuration C2, the air flow F is not deflected and flows undisturbed against the aerodynamic element 10.

In other words, in the non-operating configuration C2, the aerodynamic element 20 is positioned in such a way that the air flow F strikes the aerodynamic element 10 as if there were no aerodynamic element 20 present upstream of the aerodynamic element 10.

In an embodiment, the aerodynamic element 20 is movable between a first position P1 and a second position P2.

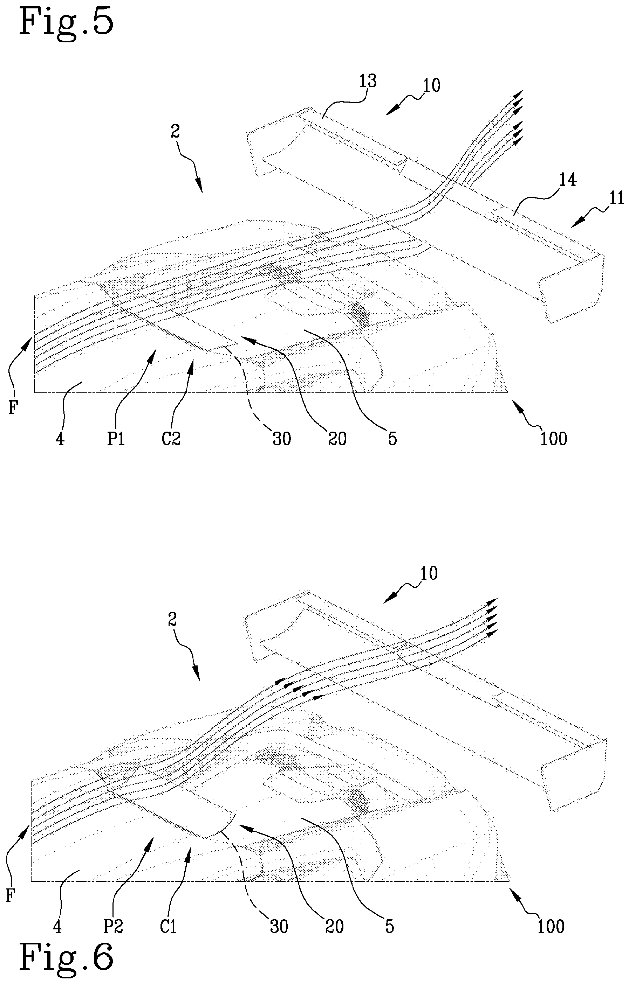

At the first position P1, as illustrated in Figure 5, the aerodynamic element 20 is away from the surface 3 of the vehicle 1 in the operating configuration C1.

At the second position P2, as illustrated in Figure 6, the aerodynamic element 20 is close to the surface 3 of the vehicle 1 in the non-operating configuration C2.

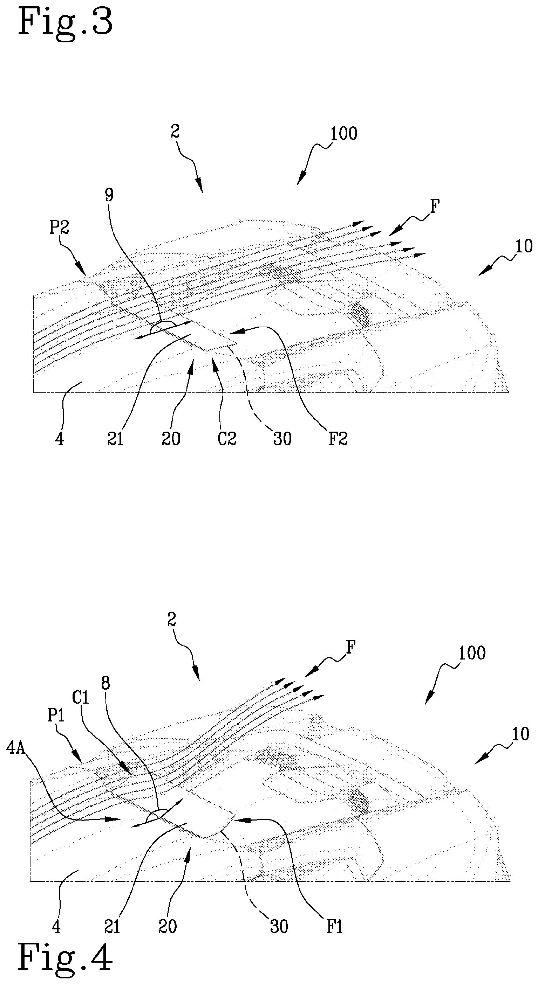

In an embodiment, the aerodynamic surface 21 makes an angle 8 with the first surface 3 in the operating configuration C1, as illustrated in Figure 4.

The aerodynamic surface 21 makes an angle 9 with the first surface 3 in the non-operating configuration C2, as illustrated in Figure 5.

The element 31 made from shape-memory alloy is configured to deform the aerodynamic surface 21 between a first shape F1, in the operating configuration C1, and a second shape F2, in the non-operating configuration C2.

In an embodiment, when it adopts the shape F1, the surface 21 adopts an upwardly directed curvature; in other words, when it has the shape F1, the surface 21 is upwardly concave.

On the other hand, when it adopts the shape F2, the surface 21 is substantially planar.

In another embodiment, however, the surface 21 remains substantially the same in shape, that is to say, the shapes F1 and F2 coincide in the operating configuration C1 and in the non-operating configuration C2 and only the angle 8, 9 which the surface 21 makes with the surface 3 varies.

In an embodiment, the vehicle comprises a drive pushbutton which is in communication with the actuator 30, allowing it to be driven.

In an embodiment, the surface 21 is moved between the operating configuration and the non-operating configuration as a function of vehicle parameters such as the following, for example: vehicle speed, lateral acceleration, position of the accelerator pedal, position of the brake pedal, position of the steering wheel.

In other words, the surface 21 is moved based on track requirements.

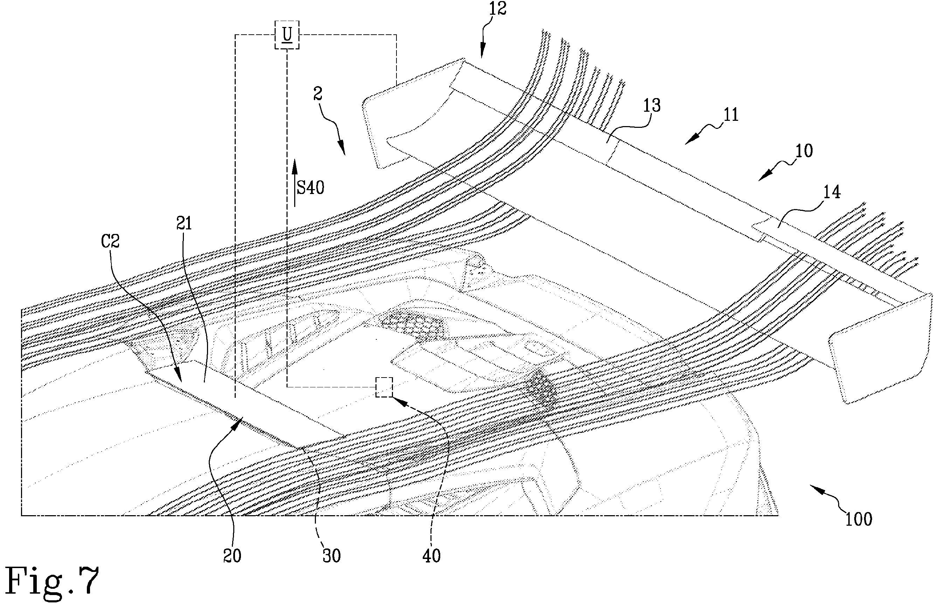

In an embodiment, as illustrated in Figure 7, the regulating system 100 comprises at least one temperature sensor 40, configured to generate a temperature signal S40.

In an embodiment, the regulating system 100 comprises a control and drive unit U in communication at least with the temperature sensor 40 and the actuator 30.

The control and drive unit U is configured to receive the temperature signal S40 and, via the actuator 30, to move the aerodynamic surface 21 as a function of the temperature signal S40.

In an embodiment, the aerodynamic element 10 comprises a rear spoiler 11 comprising a fixed portion 12 having a main direction of extension D and at least two movable portions 13, 14.

The two movable portions 13, 14 are juxtaposed with each other along the main direction of extension D.

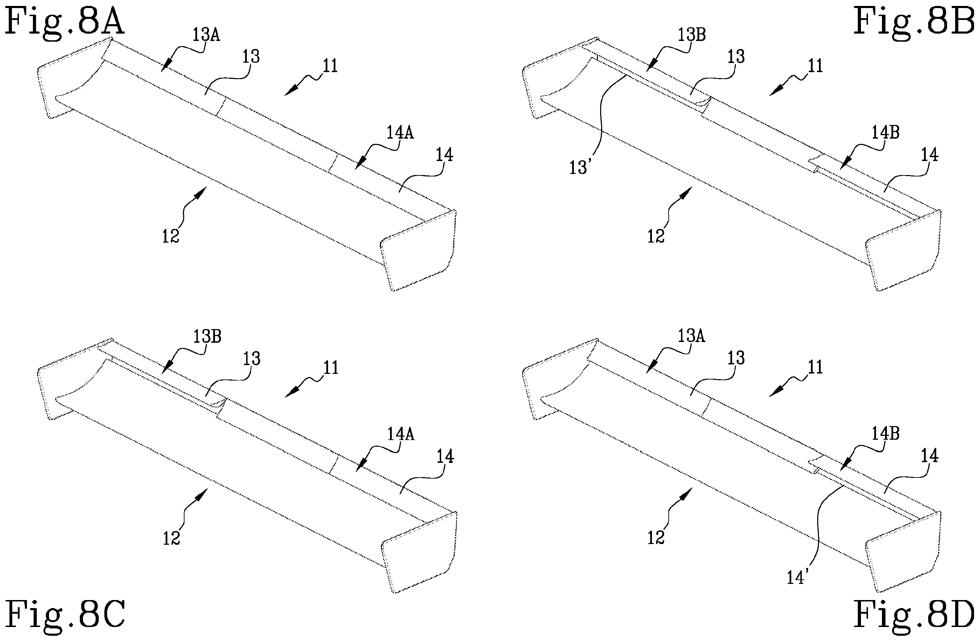

As illustrated in Figures 8A-8D, the movable portions 13, 14 are respectively movable, independently of each other, between a closed position 13A, 14A, where they are in contact with the fixed portion 12, and an open position 13B, 14B, where they are away from the fixed portion 12 to define a first and a second opening 13', 14'.

The control and drive unit U is in communication with the aerodynamic element 10, and in particular, with the spoiler 11.

The control and drive unit U is configured to move the first and/or the second movable portion 13, 14 independently of each other as a function of the temperature signal S40, thus producing a cooling effect.

In an embodiment, the control and drive unit U is in communication with the aerodynamic element 10 and is configured to move the first and/or the second movable portion 13, 14 according to the configuration C1, C2 of the aerodynamic surface 21.

Another object of this disclosure is a method for regulating an aerodynamic resistance of a vehicle as described in the foregoing.

The method comprises a step of:
- moving the aerodynamic surface 21 from the non-operating configuration C2 to the operating configuration C1 and vice versa
- at least partly deflecting an air flow F flowing over the first surface 3 and directed towards the aerodynamic element 21 in the operating configuration C1.

In an embodiment, the method comprises a step of moving the aerodynamic element 20 between a first position P1, where it is away from the surface 3 in the operating configuration C1, and a second position P2, where it is close to the first surface 3 in the non-operating configuration C2.

In an embodiment, the method comprises a step of moving the aerodynamic surface 21 to make, with the first surface 3, a first angle 8 in the operating configuration C1, and to make a second angle 9 in the non-operating configuration C2.

In an embodiment, the method comprises a step of deforming the aerodynamic surface 21 between a first shape F1, in the operating configuration C1, and a second shape F2, in the non-operating configuration C2.

In an embodiment, the method comprises a step of measuring a temperature and generating a temperature signal S40.

The step of moving the aerodynamic surface 21 between the non-operating configuration C2 and the operating configuration C1 comprises a step of moving the aerodynamic surface 21 as a function of the temperature signal S40.

In an embodiment, the method comprises a step of moving the first portion 13 and/or the second portion 14 independently of each other, between a closed position 13A, 14A, where the portions 13, 14 are in contact with the fixed portion 12, and an open position 13B, 14B, where the portions 13, 14 are away from the fixed portion 12 to define a first and a second opening 13', 14'.

In an embodiment, the step of moving the first portion 13 and/or the second portion 14 independently of each other comprises a step of moving the first and/or the second movable portion 13, 14 independently of each other as a function of the temperature signal S40.

In an embodiment, the method comprises a step of moving the first and/or the second movable portion 13, 14 as a function of whether the aerodynamic surface 21 is in the first or the second configuration C1, C2.

## Claims

1. A vehicle comprising a regulating system (100) for regulating an aerodynamic resistance, the regulating system (100) comprising:
- a first aerodynamic element (10) disposed in a rear portion of the vehicle
- a second aerodynamic element (20), coupled to a first surface (3) of the vehicle and disposed upstream of the first aerodynamic element (10) in a vehicle advancing direction, the second aerodynamic element (20) being spaced from the first element (10),
the second aerodynamic element (20) having an aerodynamic surface (21) which is movable between an operating configuration (C1), where it at least partly deflects an air flow (F) flowing over the first surface (3) and directed towards the first aerodynamic element (10), and a non-operating configuration (C2), where the aerodynamic surface (21) allows the air flow (F) to be directed towards the first aerodynamic element (10) and leaves the air flow (F) undisturbed, the regulating system (100) comprising an actuator (30) configured to move the aerodynamic surface (21) from the operating configuration (C1) to the non-operating configuration (C2) and vice versa.

2. The vehicle according to claim 1, comprising a roof (4) comprising the first surface (3), the second aerodynamic element (20) being coupled to a portion (4A) of the roof (4).

3. The vehicle according to claim 1, comprising a rear bonnet (5) comprising the first surface (3), the second aerodynamic element (20) being coupled to a portion of the rear bonnet (5).

4. The vehicle according to any one of the preceding claims, wherein the second aerodynamic element (20) is movable between a first position (P1), where it is away from the first surface (3) in the operating configuration (C1), and a second position (P2), where the second aerodynamic element (20) is close to the first surface (3) in the non-operating configuration (C2).

5. The vehicle according to any one of the preceding claims, wherein the aerodynamic surface (21) makes a first angle (8) with the first surface (3), in the operating configuration (C1), and wherein the aerodynamic surface (21) makes a second angle (9) with the first surface (3), in the non-operating configuration (C2).

6. The vehicle according to any one of the preceding claims, wherein the actuator (30) is electromechanical or mechanical.

7. The vehicle according to any one of the preceding claims, wherein the actuator (30) comprises at least one element (31) that is made from shape-memory alloy.

8. The vehicle according to claim 7, wherein the element (31) made from shape-memory alloy is configured to deform the aerodynamic surface (21) between a first shape (F1), in the operating configuration (C1), and a second shape (F2), in the non-operating configuration (C2).

9. The vehicle according to any one of the preceding claims, wherein the regulating system (100) comprises at least one temperature sensor (40), configured to generate a temperature signal (S40), and a control and drive unit (U) in communication at least with the temperature sensor (40) and with the actuator (30),
the control and drive unit (U) being configured to receive the temperature signal (S40) and, via the actuator (30), to move the aerodynamic surface (21) as a function of the temperature signal (S40).

10. The vehicle according to any one of the preceding claims, wherein the first aerodynamic element (10) comprises a rear spoiler (11) comprising a fixed portion (12) having a main direction of extension (D), and at least a first and a second movable portion (13, 14),
the first movable portion (13) being juxtaposed with the second movable portion (14) along the main direction of extension (D),
the first movable portion (13) and the second movable portion (14) being respectively movable, independently of each other, between a closed position (13A, 14A), where they are in contact with the fixed portion (12), and an open position (13B, 14B), where they are away from the fixed portion (12) to define a first and a second opening (13', 14').

11. The vehicle according to claims 9 and 10, wherein the control and drive unit (U) is in communication with the first aerodynamic element (10) and is configured to move the first and/or the second movable portion (13, 14) independently as a function of the temperature signal (S40).

12. The vehicle according to claim 10 or 11, wherein the control and drive unit (U) is in communication with the first aerodynamic element (10) and is configured to move the first and/or the second movable portion as a function of whether the aerodynamic surface (21) is in the operating configuration or the non-operating configuration (C1, C2).

13. A method for regulating an aerodynamic resistance of a vehicle according to any one of claims 1 to 12, comprising the following steps:
- moving the aerodynamic surface (21) from the non-operating configuration (C2) to the operating configuration (C1) and vice versa,
- at least partly deflecting an air flow (F) flowing over the first surface (3) and directed towards the first aerodynamic element (10) in the operating configuration (C1).

14. The method according to claim 13, comprising a step of moving the second aerodynamic element (20) between a first position (P1), where it is away from the first surface (3) in the operating configuration (C1), and a second position (P2), where it is close to the first surface (3) in the non-operating configuration (C2).

15. The method according to claim 13 or 14, comprising a step of deforming the aerodynamic surface between a first shape (F1), in the operating configuration (C1), and a second shape (F2), in the non-operating configuration (C2).

16. The method according to any one of claims 13 to 15, comprising a step of measuring a temperature and generating a temperature signal (S40),
the step of moving the aerodynamic surface between the non-operating configuration (C2) and the operating configuration (C1) comprises a step of moving the aerodynamic surface (21) as a function of the temperature signal (S40).

17. The method according to any one of claims 13 to 16, wherein the first aerodynamic element (10) comprises a rear spoiler (11) comprising a fixed portion (12) having a main direction of extension (D), and at least a first and a second movable portion (13, 14),
the method comprising a step of moving the first movable portion (13) and/or the second movable portion (14) independently of each other, between a closed position (13A, 14A), where they are in contact with the fixed portion (12), and an open position (13B, 14B), where they are away from the fixed portion (12) to define a first and a second opening (13', 14').

18. The method according to claims 16 and 17, wherein the step of moving the first movable portion (13) and/or the second movable portion (14) independently comprises a step of moving the first movable portion (13) and/or the second movable portion (14) independently as a function of the temperature signal (S40).

19. The method according to claim 17 or 18, comprising a step of moving the first and/or the second movable portion (13, 14) as a function of whether the aerodynamic surface (21) is in the operating configuration (C1) or the non-operating configuration (C2).

## Patentansprüche

1. Fahrzeug, umfassend ein Regelungssystem (100) zur Regelung eines aerodynamischen Widerstands, wobei das Regelungssystem (100) Folgendes umfasst:
- ein erstes aerodynamisches Element (10), das in einem hinteren Abschnitt des Fahrzeugs angeordnet ist,
- ein zweites aerodynamisches Element (20), das mit einer ersten Oberfläche (3) des Fahrzeugs gekoppelt und in einer Vorschubrichtung des Fahrzeugs stromaufwärts des ersten aerodynamischen Elements (10) angeordnet ist, wobei das zweite aerodynamische Element (20) von dem ersten Element (10) beabstandet ist,
wobei das zweite aerodynamische Element (20) eine aerodynamische Oberfläche (21) aufweist, die zwischen einer Betriebskonfiguration(C1), in der sie einen über die erste Oberfläche (3) strömenden und auf das erste aerodynamische Element (10) gerichteten Luftstrom (F) zumindest teilweise umlenkt, und einer Nichtbetriebskonfiguration (C2) beweglich ist, in der die aerodynamische Oberfläche (21) ermöglicht, dass der Luftstrom (F) zum ersten aerodynamischen Element (10) geleitet wird, und den Luftstrom (F) ungehindert lässt, wobei das Regelungssystem (100) einen Aktuator (30) umfasst, der dazu ausgelegt ist, die aerodynamische Oberfläche (21) von der Betriebskonfiguration (C1) in die Nichtbetriebskonfiguration (C2) und umgekehrt zu bewegen.

2. Fahrzeug nach Anspruch 1, umfassend ein Dach (4), das die erste Oberfläche (3) umfasst, wobei das zweite aerodynamische Element (20) mit einem Abschnitt (4A) des Daches (4) gekoppelt ist.

3. Fahrzeug nach Anspruch 1, umfassend eine hintere Haube (5), die die erste Oberfläche (3) umfasst, wobei das zweite aerodynamische Element (20) mit einem Abschnitt der hinteren Haube (5) gekoppelt ist.

4. Fahrzeug nach einem der vorhergehenden Ansprüche, wobei das zweite aerodynamische Element (20) zwischen einer ersten Position (P1), in der es in der Betriebskonfiguration(C1) von der ersten Oberfläche (3) entfernt ist, und einer zweiten Position (P2) beweglich ist, in der das zweite aerodynamische Element (20) in der Nichtbetriebskonfiguration (C2) nahe der ersten Oberfläche (3) ist.

5. Fahrzeug nach einem der vorhergehenden Ansprüche, wobei die aerodynamische Oberfläche (21) in der Betriebskonfiguration (C1) einen ersten Winkel (8) mit der ersten Oberfläche (3) bildet und wobei die aerodynamische Oberfläche (21) in der Nichtbetriebskonfiguration (C2) einen zweiten Winkel (9) mit der ersten Oberfläche (3) bildet.

6. Fahrzeug nach einem der vorhergehenden Ansprüche, wobei der Aktuator (30) elektromechanisch oder mechanisch ist.

7. Fahrzeug nach einem der vorhergehenden Ansprüche, wobei der Aktuator (30) mindestens ein Element (31) umfasst, das aus einer Formgedächtnislegierung besteht.

8. Fahrzeug nach Anspruch 7, wobei das aus einer Formgedächtnislegierung bestehende Element (31) dazu ausgelegt ist, die aerodynamische Oberfläche (21) zwischen einer ersten Form (F1) in der Betriebskonfiguration (C1) und einer zweiten Form (F2) in der Nichtbetriebskonfiguration (C2) zu verformen.

9. Fahrzeug nach einem der vorhergehenden Ansprüche, wobei das Regelungssystem (100) mindestens einen Temperatursensor (40), der zur Erzeugung eines Temperatursignals (S40) ausgelegt ist, und eine Steuer- und Antriebseinheit (U) umfasst, die mindestens mit dem Temperatursensor (40) und mit dem Aktuator (30) in Kommunikation steht,
wobei die Steuer- und Antriebseinheit (U) dazu ausgelegt ist, das Temperatursignal (S40) zu empfangen und die aerodynamische Oberfläche (21) über den Aktuator (30) in Abhängigkeit vom Temperatursignal (S40) zu bewegen.

10. Fahrzeug nach einem der vorhergehenden Ansprüche, wobei das erste aerodynamische Element (10) einen Heckspoiler (11) umfasst, der einen festen Abschnitt (12) mit einer Haupterstreckungsrichtung (D) und mindestens einen ersten und einen zweiten beweglichen Abschnitt (13, 14) umfasst,
wobei der erste bewegliche Abschnitt (13) entlang der Haupterstreckungsrichtung (D) neben dem zweiten beweglichen Abschnitt (14) angeordnet ist,
wobei der erste bewegliche Abschnitt (13) und der zweite bewegliche Abschnitt (14) unabhängig voneinander zwischen einer geschlossenen Position (13A, 14A), in der sie mit dem festen Abschnitt (12) in Kontakt stehen, und einer offenen Position (13B, 14B), in der sie vom festen Abschnitt (12) entfernt sind, um eine erste und eine zweite Öffnung (13', 14') zu definieren, beweglich sind.

11. Fahrzeug nach den Ansprüchen 9 und 10, wobei die Steuer- und Antriebseinheit (U) mit dem ersten aerodynamischen Element (10) in Kommunikation steht und dazu ausgelegt ist, den ersten und/oder den zweiten beweglichen Abschnitt (13, 14) in Abhängigkeit vom Temperatursignal (S40) unabhängig voneinander zu bewegen.

12. Fahrzeug nach Anspruch 10 oder 11, wobei die Steuer- und Antriebseinheit (U) mit dem ersten aerodynamischen Element (10) in Kommunikation steht und dazu ausgelegt ist, den ersten und/oder den zweiten beweglichen Abschnitt in Abhängigkeit davon zu bewegen, ob sich die aerodynamische Oberfläche (21) in der Betriebskonfiguration oder in der Nichtbetriebskonfiguration (C1, C2) befindet.

13. Verfahren zur Regelung eines aerodynamischen Widerstands eines Fahrzeugs nach einem der Ansprüche 1 bis 12, umfassend die folgenden Schritte:
- Bewegen der aerodynamischen Oberfläche (21) von der Nichtbetriebskonfiguration (C2) in die Betriebskonfiguration(C1) und umgekehrt,
- zumindest teilweises Umlenken eines über die erste Oberfläche (3) strömenden und in der Betriebskonfiguration (C1) auf das erste aerodynamische Element (10) gerichteten Luftstroms (F).

14. Verfahren nach Anspruch 13, umfassend einen Schritt zum Bewegen des zweiten aerodynamischen Elements (20) zwischen einer ersten Position (P1), in der es in der Betriebskonfiguration (C1) von der ersten Oberfläche (3) entfernt ist, und einer zweiten Position (P2), in der es in der Nichtbetriebskonfiguration (C2) nahe der ersten Oberfläche (3) ist.

15. Verfahren nach Anspruch 13 oder 14, umfassend einen Schritt zum Verformen der aerodynamischen Oberfläche zwischen einer ersten Form (F1) in der Betriebskonfiguration (C1) und einer zweiten Form (F2) in der Nichtbetriebskonfiguration (C2).

16. Verfahren nach einem der Ansprüche 13 bis 15, umfassend einen Schritt zum Messen einer Temperatur und zum Erzeugen eines Temperatursignals (S40),
wobei der Schritt zum Bewegen der aerodynamischen Oberfläche zwischen der Nichtbetriebskonfiguration (C2) und der Betriebskonfiguration (C1) einen Schritt zum Bewegen der aerodynamischen Oberfläche (21) in Abhängigkeit von dem Temperatursignal (S40) umfasst.

17. Verfahren nach einem der Ansprüche 13 bis 16, wobei das erste aerodynamische Element (10) einen Heckspoiler (11) umfasst, der einen festen Abschnitt (12) mit einer Haupterstreckungsrichtung (D) und mindestens einen ersten und einen zweiten beweglichen Abschnitt (13, 14) umfasst,
wobei das Verfahren einen Schritt zum Bewegen des ersten beweglichen Abschnitt (13) und/oder des zweiten beweglichen Abschnitt (14) unabhängig voneinander zwischen einer geschlossenen Position (13A, 14A), in der sie mit dem festen Abschnitt (12) in Kontakt stehen, und einer offenen Position (13B, 14B), in der sie vom festen Abschnitt (12) entfernt sind, um eine erste und eine zweite Öffnung (13', 14') zu definieren, umfasst.

18. Verfahren nach den Ansprüchen 16 und 17, wobei der Schritt zum Bewegen des ersten beweglichen Abschnitts (13) und/oder des zweiten beweglichen Abschnitts (14) unabhängig voneinander einen Schritt zum Bewegen des ersten beweglichen Abschnitts (13) und/oder des zweiten beweglichen Abschnitts (14) unabhängig voneinander in Abhängigkeit vom Temperatursignal (S40) umfasst.

19. Verfahren nach Anspruch 17 oder 18, umfassend einen Schritt zum Bewegen des ersten und/oder des zweiten beweglichen Abschnitts (13, 14) in Abhängigkeit davon, ob sich die aerodynamische Oberfläche (21) in der Betriebskonfiguration (C1) oder in der Nichtbetriebskonfiguration (C2) befindet.

## Revendications

1. Véhicule, comprenant un système de régulation (100) pour la régulation d'une résistance aérodynamique, le système de régulation (100) comprenant :
- un premier élément aérodynamique (10) disposé dans une portion arrière du véhicule,
- un second élément aérodynamique (20), accouplé à une première surface (3) du véhicule et disposé en amont du premier élément aérodynamique (10) dans une direction d'avancement de véhicule, le second élément aérodynamique (20) étant espacé du premier élément (10), le second élément aérodynamique (20) ayant une surface aérodynamique (21) qui est mobile entre une configuration de fonctionnement (C1), où elle dévie au moins partiellement un flux d'air (F) s'écoulant sur la première surface (3) et dirigé vers le premier élément aérodynamique (10), et une configuration de non fonctionnement (C2), où la surface aérodynamique (21) permet au flux d'air (F) d'être dirigé vers le premier élément aérodynamique (10) et laisse le flux d'air (F) intact, le système de régulation (100) comprenant un actionneur (30) configuré pour déplacer la surface aérodynamique (21) de la configuration de fonctionnement (C1) à la configuration de non fonctionnement (C2) et vice versa.

2. Véhicule selon la revendication 1, comprenant un toit (4) comprenant la première surface (3), le second élément aérodynamique (20) étant accouplé à une portion (4A) du toit (4).

3. Véhicule selon la revendication 1, comprenant un capot arrière (5) comprenant la première surface (3), le second élément aérodynamique (20) étant accouplé à une portion du capot arrière (5).

4. Véhicule selon l'une quelconque des revendications précédentes, dans lequel le second élément aérodynamique (20) est mobile entre une première position (P1), où il est éloigné de la première surface (3) dans la configuration de fonctionnement (C1), et une seconde position (P2), où le second élément aérodynamique (20) est proche de la première surface (3) dans la configuration de non fonctionnement (C2).

5. Véhicule selon l'une quelconque des revendications précédentes, dans lequel la surface aérodynamique (21) fait un premier angle (8) avec la première surface (3), dans la configuration de fonctionnement (C1), et dans lequel la surface aérodynamique (21) fait un second angle (9) avec la première surface (3), dans la configuration de non fonctionnement (C2).

6. Véhicule selon l'une quelconque des revendications précédentes, dans lequel l'actionneur (30) est électromécanique ou mécanique.

7. Véhicule selon l'une quelconque des revendications précédentes, dans lequel l'actionneur (30) comprend au moins un élément (31) qui est fait à partir d'un alliage de mémoire de forme.

8. Véhicule selon la revendication 7, dans lequel l'élément (31) fait à partir d'alliage de mémoire de forme est configuré pour déformer la surface aérodynamique (21) entre une première forme (F1), dans la configuration de fonctionnement (C1), et une seconde forme (F2), dans la configuration de non fonctionnement (C2) .

9. Véhicule selon l'une quelconque des revendications précédentes, dans lequel le système de régulation (100) comprend au moins un capteur de température (40), configuré pour générer un signal de température (S40), et une unité de commande et d'entraînement (U) en communication au moins avec le capteur de température (40) et avec l'actionneur (30),
l'unité de commande et d'entraînement (U) étant configurée pour recevoir le signal de température (S40) et, via l'actionneur (30), pour déplacer la surface aérodynamique (21) en fonction du signal de température (S40) .

10. Véhicule selon l'une quelconque des revendications précédentes, dans lequel le premier élément aérodynamique (10) comprend un déflecteur arrière (11) comprenant une portion fixe (12) ayant une direction principale d'extension (D), et au moins une première et une seconde portion mobile (13, 14),
la première portion mobile (13) étant juxtaposée avec la seconde portion mobile (14) le long de la direction principale d'extension (D),
la première portion mobile (13) et la seconde portion mobile (14) étant respectivement mobiles, indépendamment l'une de l'autre, entre une position fermée (13A, 14A), où elles sont en contact avec la portion fixe (12), et une position ouverte (13B, 14B), où elles sont éloignées de la portion fixe (12) pour définir une première et une seconde ouverture (13', 14').

11. Véhicule selon les revendications 9 et 10, dans lequel l'unité de commande et d'entraînement (U) est en communication avec le premier élément aérodynamique (10) et est configurée pour déplacer la première et/ou la seconde portion mobile (13, 14) indépendamment en fonction du signal de température (S40).

12. Véhicule selon la revendication 10 ou 11, dans lequel l'unité de commande et d'entraînement (U) est en communication avec le premier élément aérodynamique (10) et est configurée pour déplacer la première et/ou la seconde portion mobile en fonction du fait que la surface aérodynamique (21) est dans la configuration de fonctionnement ou dans la configuration de non fonctionnement (C1, C2).

13. Procédé de régulation d'une résistance aérodynamique d'un véhicule selon l'une quelconque des revendications de 1 à 12, comprenant les étapes suivantes :
- déplacer la surface aérodynamique (21) de la configuration de non fonctionnement (C2) à la configuration de fonctionnement (C1) et vice-versa,
- dévier au moins partiellement un flux d'air (F) s'écoulant sur la première surface (3) et dirigé vers le premier élément aérodynamique (10) dans la configuration de fonctionnement (C1).

14. Procédé selon la revendication 13, comprenant une étape de déplacement du second élément aérodynamique (20) entre une première position (P1), où il est éloigné de la première surface (3) dans la configuration de fonctionnement (C1), et une seconde position (P2), où il est proche de la première surface (3) dans la configuration de non fonctionnement (C2).

15. Procédé selon la revendication 13 ou 14, comprenant une étape de déformation de la surface aérodynamique entre une première forme (F1), dans la configuration de fonctionnement (C1), et une seconde forme (F2), dans la configuration de non fonctionnement (C2).

16. Procédé selon l'une quelconque des revendications 13 à 15, comprenant une étape de mesure d'une température et de génération d'un signal de température (S40), l'étape de déplacement de la surface aérodynamique entre la configuration de non fonctionnement (C2) et la configuration de fonctionnement (C1) comprend une étape de déplacement de la surface aérodynamique (21) en fonction du signal de température (S40).

17. Procédé selon l'une quelconque des revendications 13 à 16, dans lequel le premier élément aérodynamique (10) comprend un déflecteur arrière (11) comprenant une portion fixe (12) ayant une direction principale d'extension (D), et au moins une première et une seconde portion mobile (13, 14),
le procédé comprenant une étape de déplacement de la première portion (13) et/ou de la seconde portion mobile (14) indépendamment l'une de l'autre, entre une position fermée (13A, 14A), où elles sont en contact avec la portion fixe (12), et une position ouverte (13B, 14B), où elles sont éloignées de la portion fixe (12) pour définir une première et une seconde ouverture (13', 14').

18. Procédé selon les revendications 16 et 17, dans lequel l'étape de déplacement de la première portion mobile (13) et/ou de la seconde portion mobile (14) comprend indépendamment une étape de déplacement de la première portion mobile (13) et/ou de la seconde portion mobile (14) indépendamment en fonction du signal de température (S40).

19. Procédé selon la revendication 17 ou 18, comprenant une étape de déplacement de la première et/ou de la seconde portion mobile (13, 14) en fonction du fait que la surface aérodynamique (21) est dans la configuration de fonctionnement (C1) ou dans la configuration de non fonctionnement (C2).
